# EUROPEAN PATENT APPLICATION

(11) **EP 4 576 302 A1**
(43) Date of publication of application: **25.06.2025**
(21) Application number: 24760523.1
(22) Date of filing: 14.02.2024
(51) Int. Cl.: H01M 10/0562

(54) **SULFIDE-BASED SOLID ELECTROLYTE, METHOD FOR PREPARING SULFIDE-BASED SOLID ELECTROLYTE, AND ALL-SOLID-STATE BATTERY INCLUDING SULFIDE-BASED SOLID ELECTROLYTE**

(30) Priority: 21.02.2023 JP 2023025317
(71) Applicant: LG Energy Solution, Ltd., Seoul 07335 (KR)
(72) Inventor: NARIMATSU, Eiichiro, Yokohama-shi, Kanagawa 220--0011 (JP); IKENOMOTO, Shun, Yokohama-shi, Kanagawa 220--0011 (JP); MATSUBARA, Keiko, Yokohama-shi, Kanagawa 220--0011 (JP)
(74) Representative: Goddar, Heinz J.
(86) International application number: PCT/KR2024/002102
(87) International publication number: WO 2024/177333

(57) **Abstract**

There are provided a sulfide-based solid electrolyte with improved ionic conductivity, a method for preparing the sulfide-based solid electrolyte and an all-solid-state battery including the sulfide-based solid electrolyte. The present disclosure relates to a sulfide-based solid electrolyte including Group 13 elements, wherein the sulfide-based solid electrolyte has an argyrodite-type crystal structure, wherein the sulfide-based solid electrolyte is represented by chemical formula Li_{7-x-3y}M_{y}PS₆₋ₓHaₓ, wherein in the chemical formula, the M is at least one selected from the Group 13 elements, wherein the Ha is at least one selected from halogen elements, and the Ha includes Br, and wherein 0 < x< 2.5 and 0 < y < 0.2 are satisfied.

## Description

### TECHNICAL FIELD

The present disclosure relates to a sulfide-based solid electrolyte, a method for preparing the sulfide-based solid electrolyte and an all-solid-state battery including the sulfide-based solid electrolyte.

The present application claims priority to Japanese Patent Application No. 2023-025317 filed on February 21, 2023, the disclosure of which is incorporated herein by reference.

### BACKGROUND

To achieve higher safety, longer life and higher energy density, all-solid-state batteries using solid electrolytes in place of liquid electrolytes of lithium ion batteries have been developed. Among many solid electrolytes, sulfide-based solid electrolytes, for example, Li₁₀GeP₂S₁₂ have ionic conductivity that is as high as liquid electrolytes and are easy to obtain close contact with soft active materials, so it is expected to commercialize all-solid-state batteries using sulfide-based solid electrolytes.

Lithium metals are attracting attention as a negative electrode material of all-solid-state batteries because they can increase mass energy density (Wh/kg) due to low weight per unit volume and high theoretical capacity. However, sulfide-based solid electrolytes, for example, Li₁₀GeP₂S₁₂ are difficult to use with lithium metal negative electrodes due to low stability for lithium metals.

To solve this problem, Patent Literature 1 to Patent Literature 3 disclose sulfide-based solid electrolytes having an argyrodite-type crystal structure represented by Li_{7-x-3y}PS_{6-x-y}Clₓ that is stable for lithium metals. Patent Literature 4 discloses a sulfide-based solid electrolyte with improved stability for lithium metals by precisely controlling the composition of the sulfide-based solid electrolyte having Li₁₀GeP₂S₁₂ crystal structure.

However, low ionic conductivity of sulfide-based solid electrolytes is challenging.

### [RELATED ART DOCUMENT]

### [Patent Literature]

Patent Literature 1: Japanese Patent No. 5873533
Patent Literature 2: Japanese Patent Publication No. 2018-45997
Patent Literature 3: Japanese Patent Publication No. 2018-203569
Patent Literature 4: Japanese Patent Publication No. 2016-27545

### SUMMARY

### Technical Problem

The present disclosure is directed to providing a sulfide-based solid electrolyte with improved ionic conductivity, a method for preparing the sulfide-based solid electrolyte and an all-solid-state battery including the sulfide-based solid electrolyte.

### Technical Solution

To achieve the above-described objective, the present disclosure provides a sulfide-based solid electrolyte including Group 13 elements, wherein the sulfide-based solid electrolyte has an argyrodite-type crystal structure, wherein the sulfide-based solid electrolyte is represented by chemical formula Li_{7-x-3y}M_{y}PS₆₋ₓHaₓ, wherein in the chemical formula, the M is at least one selected from the Group 13 elements, wherein the Ha is at least one selected from halogen elements, and the Ha includes Br, and wherein 0 < x< 2.5 and 0 < y < 0.2 are satisfied.

In an embodiment, the y may satisfy 0 < y < 0.1.

In an embodiment, the M may be Al or Ga.

In an embodiment, the M may be present at a 96i site of the argyrodite-type crystal structure.

The present disclosure provides a method for preparing the sulfide-based solid electrolyte defined in any one of the above-described embodiments, the method including mixing a lithium source, a Group 13 element source, a phosphorus source, a sulfur source and a halogen source to obtain a mixture; and sintering the mixture at a temperature of from 250°C to 600°C.

The present disclosure provides an all-solid-state battery including a positive electrode, a negative electrode and a solid electrolyte layer, wherein the solid electrolyte layer includes the sulfide-based solid electrolyte defined in any one of the above-described embodiments.

### Advantageous Effects

The present disclosure may provide the sulfide-based solid electrolyte with improved ionic conductivity, the method for preparing the sulfide-based solid electrolyte and the all-solid-state battery including the sulfide-based solid electrolyte.

### BRIEF DESCRIPTION OF THE DRAWINGS

FIG. 1 shows X-ray diffraction (XRD) patterns of Example 1 to Example 5, Comparative Example 1 and Comparative Example 3.
FIG. 2 shows XRD patterns of Example 6 to Example 11, Comparative Example 2 and Comparative Example 3.
FIG. 3 is a graph showing lithium ionic conductivity as a function of composition of a sulfide-based solid electrolyte.

### DETAILED DESCRIPTION

Hereinafter, the present disclosure will be described in more detail.

It should be understood that the words or terms used in the specification and the appended claims should not be construed as being limited to general and dictionary meanings, but rather interpreted based on the meaning and concept corresponding to the technical aspect of the present disclosure on the basis of the principle that the inventor is allowed to define terms appropriately for the best explanation.

### [Solid electrolyte for all-solid-state battery]

A solid electrolyte for an all-solid-state battery of the present disclosure may include at least one of a sulfide-based solid electrolyte, an oxide-based solid electrolyte and a polymer-based solid electrolyte. Preferably, the solid electrolyte for the all-solid-state battery of the present disclosure is a sulfide-based solid electrolyte. The solid electrolyte for the all-solid-state battery may be mixed with a positive electrode mixture material for use as a positive electrode material, and may be mixed with a negative electrode mixture material for use as a negative electrode material, and may be used as a separator. The solid electrolyte for the all-solid-state battery may further include an additive, for example, a lithium salt, a conductive material and a binder resin according to the purpose of use.

### < Sulfide-based solid electrolyte >

The sulfide-based solid electrolyte may include any sulfide-based solid electrolyte containing sulfur (S) commonly used in the art without limitation.

The sulfide-based solid electrolyte may have a crystal structure. The sulfide-based solid electrolyte having the crystal structure may have high lithium ionic conductivity by accelerating the conduction of lithium ions.

The sulfide-based solid electrolyte may have an argyrodite-, NASICON-, Perovskite-, Garnet-, or LGPS-type crystal structure. Preferably, the sulfide-based solid electrolyte has an argyrodite-type crystal structure. The sulfide-based solid electrolyte having the argyrodite-type crystal structure has high stability for lithium metals, which makes it possible to use lithium metals having high mass energy density as a negative electrode material.

The sulfide-based solid electrolyte may be an amorphous, glassy or glass-ceramic.

The sulfide-based solid electrolyte may have ionic conductivity of Group 1 or 2 metals in the periodic table, and may include Li-P-S based glasses or Li-P-S based glass ceramics. Non-limiting examples of the sulfide-based solid electrolyte may include at least one of Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, or Li₂S-GeS₂-ZnS. However, the sulfide-based solid electrolyte is not particularly limited thereto.

The sulfide-based solid electrolyte may include a crystalline phase and an amorphous phase. The sulfide-based solid electrolyte may include the crystalline phase (in the specification, also referred to as argyrodite phase) including the argyrodite-type crystal structure, and the other phase (in the specification, also referred to as an impurity phase or an unknown phase). The argyrodite-type crystal structure is preferably a cubic system. The other phase may be a crystalline phase, and may be an amorphous phase. The other phase may include Li₂S phase, P₂S₅ phase, LiCl phase, LiBr phase, Li₃PS₄ phase, Al₂S₃ phase, Ga₂S₃ phase and In₂S₃ phase, regardless of whether it is a crystalline phase or an amorphous phase. Preferably, the sulfide-based solid electrolyte does not include or does not substantially include the impurity phase other than the argyrodite phase. That is, preferably, the sulfide-based solid electrolyte may consist of the argyrodite phase. When the sulfide-based solid electrolyte does not include or does not substantially include the impurity phase, the sulfide-based solid electrolyte may have high lithium ionic conductivity because the conduction of lithium ions is not easily hindered.

A ratio of the crystalline phase included in the sulfide-based solid electrolyte may be quantitatively or non-quantitatively evaluated from an X-ray diffraction (XRD) pattern. As one method, the ratio of the crystalline phase may be evaluated by comparing the peak intensity (height or area) of the XRD pattern.

The sulfide-based solid electrolyte according to an embodiment of the present disclosure is represented by chemical formula Li_{7-x-3y}M_{y}PS₆₋ₓHaₓ. In the above chemical formula, the M is at least one selected from Group 13 elements, the Ha is at least one selected from halogen elements, and 0 < x < 2.5, 0 < y< 0.2 are satisfied. The sulfide-based solid electrolyte may have high lithium ionic conductivity.

The sulfide-based solid electrolyte may be formed by partial substitution of Group 13 element (M) that may form a trivalent cation for lithium in Li₇₋ₓPS₆₋ₓHaₓ. The Group 13 element (M) that replaces lithium may be at least one selected from the group consisting of aluminum (Al), gallium (Ga) and indium (In). The aluminum (Al), gallium (Ga) and indium (In) may be used singly or in combination. The ionic radius (6-coordinate) of lithium (Li) is 76pm, and the ionic radius (6-coordinate) of aluminum (Al), gallium (Ga) and indium (In) is 68pm, 76pm and 94pm, respectively. Based on the valency of elements, three lithium (sites) may be replaced by one Group 13 element (M). The lithium sites are replaced by the Group 13 element (M) to form lithium site voids, thereby improving lithium ionic conductivity. Additionally, the lattice constant and lattice volume of the sulfide-based solid electrolyte are changed by the substitution of the Group 13 element (M) for the lithium sites, leading to the crystal structure suitable for the conduction of lithium ions.

Additionally, the sulfide-based solid electrolyte may be formed by incorporation of the Group 13 element (M) that may form a trivalent cation into the crystal lattice of Li₇₋ₓPS₆₋ₓHaₓ. The Group 13 element (M) that is incorporated into the crystal lattice may be at least one selected from the group consisting of aluminum (Al), gallium (Ga) and indium (In). The aluminum (Al), gallium (Ga) and indium (In) may be used singly or in combination. The incorporation of Group 13 element (M) into the crystal lattice of Li₇₋ₓPS₆₋ₓHaₓ may change the lattice constant and lattice volume of the sulfide-based solid electrolyte, leading to the crystal structure suitable for the conduction of lithium ions.

Preferably, the Group 13 element (M) is aluminum (Al) or gallium (Ga). When the Group 13 element (M) is aluminum (Al) or gallium (Ga), the sulfide-based solid electrolyte may have high degree of crystallinity, and accordingly the sulfide-based solid electrolyte may have high ionic conductivity. It is thought that the argyrodite-type crystal structure is easily maintained after the substitution of the Group 13 element (M) because the ionic radius of lithium (Li) of 76pm and the ionic radius of aluminum (Al) and gallium (Ga) of 68pm and 76pm, respectively, are close to each other.

The amount y of the Group 13 element (M) added in the chemical formula Li_{7-x-3y}M_{y}PS₆₋ₓHaₓ satisfies 0 < y < 0.2. When the Group 13 element (M) is aluminum (Al), preferably, y may satisfy 0< y< 0.1, more preferably 0.01≤y≤0.08, more preferably 0.02≤y≤0.07, and most preferably 0.03≤y≤0.06. When the Group 13 element (M) is gallium (Ga) or indium (In), preferably, y may satisfy 0 < y< 0.1, more preferably 0< y< 0.05, more preferably 0< y< 0.025, and most preferably 0.01≤y≤0.015. When y satisfies the aforementioned range, the sulfide-based solid electrolyte may have high ionic conductivity. When y is 0, it fails to obtain the change in crystal structure by the substitution of the Group 13 element (M), resulting in low ionic conductivity. When y is 0.2 or more, it fails to maintain the argyrodite-type crystal structure of the sulfide-based solid electrolyte, and additionally, there is an increase in impurity phase that hinders the conduction of lithium ions in the sulfide-based solid electrolyte, resulting in low ionic conductivity.

Aluminum (Al) in a relatively large amount y may maintain the argyrodite-type crystal structure of the sulfide-based solid electrolyte. On the other hand, gallium (Ga) or indium (In) in a relatively small amount y may maintain the argyrodite-type crystal structure of the sulfide-based solid electrolyte. Although not constrained to the theory, it is thought that the reason lies in a difference in property between aluminum (Al) and gallium (Ga) and indium (In). For example, when gallium (Ga) is used as a component of an alloy, it is easy to diffuse the grain boundary of the alloy, thereby promoting formation of alloys with other metals. This feature may be observed in indium (In) having electrons in d orbitals in the same way as gallium (Ga). Accordingly, it is thought that gallium (Ga) or indium (In) in a smaller amount y than aluminum (Al) may maintain the argyrodite-type crystal structure of the sulfide-based solid electrolyte.

Preferably, the Group 13 element (M) is present at the 96i site of the argyrodite-type crystal structure. More preferably, the Group 13 element (M) is only present at the 96i site of the argyrodite-type crystal structure. The argyrodite-type crystal structure may be cubic, hexagonal, tetragonal, orthorhombic, monoclinic or triclinic. When the argyrodite-type crystal structure is cubic (space group F43m), the Group 13 element (M) may be present at the 96i site in the crystal structure, to create lithium site voids without hindering the ion conduction paths of lithium ions. In this case, the sulfide-based solid electrolyte may have high lithium ionic conductivity.

In the formula Li_{7-x-3y}M_{y}PS₆₋ₓHaₓ, the halogen (Ha) is at least one selected from halogen elements. The halogen (Ha) preferably includes bromine (Br). More preferably, the halogen (Ha) includes chlorine (Cl) and bromine (Br). When the sulfur (S) is a bivalent anion, it attracts lithium ions more strongly than the monovalent halogen, notably hindering the movements of lithium ions. The inclusion of bromine (Br) as halogen may lead to low sulfur (S) occupancy at the specific site in the argyrodite-type crystal structure, high halogen occupancy of the corresponding site, and high lithium ion mobility near the bromine (Br) site. As a result, it may be possible to improve the lithium ionic conductivity. Additionally, bromine (Br) binds with Li in the sulfide-based solid electrolyte to form lithium bromide (LiBr) that is a water absorbing material. The lithium bromide (LiBr) absorbs moisture that may reduce lithium ionic conductivity, thereby improving lithium ionic conductivity of the sulfide-based solid electrolyte.

In the above chemical formula Li_{7-x-3y}M_{y}PS₆₋ₓHaₓ, a ratio x of the halogen (Ha) satisfies 0 < x < 2.5, preferably 1.0≤x≤2.3, more preferably 1.3≤x≤2.0, and more preferably 1.3≤x≤1.8. When x satisfies the aforementioned range, the argyrodite-type crystal structure may be stabilized, and the sulfide-based solid electrolyte may have high ionic conductivity.

The ionic conductivity of the sulfide-based solid electrolyte may be influenced by the degree of crystallinity of the sulfide-based solid electrolyte. The degree of crystallinity may be evaluated from the XRD pattern. In the XRD pattern, when the phase other than the argyrodite crystalline phase (the crystalline or amorphous phase such as Li₂S phase, P₂S₅ phase, LiCl phase, LiBr phase, Li₃PS₄ phase, Al₂S₃ phase, Ga₂S₃ phase and In₂S₃ phase) is hardly observed or not observed, the sulfide-based solid electrolyte may have high ionic conductivity.

The lattice volume of the sulfide-based solid electrolyte may be changed by the substitution of the Group 13 element (M) for the lithium sites. Although not constrained to the theory, it is thought that because the Group 13 element (M) has properties of a trivalent cation, there is a change, i.e., an increase or a decrease in lattice volume by strong interactions with other anions present in the sulfide-based solid electrolyte. The change in lattice volume may lead to a crystal structure for lithium ion conduction, and the sulfide-based solid electrolyte may have high ionic conductivity.

The lattice volume of the sulfide-based solid electrolyte is 940Å³ or more and 980Å³ or less, preferably 950Å³ or more and 970Å³ or less, more preferably 954Å³ or more and 966Å³ or less, and more preferably 957Å³ or more and 963Å³ or less. The lattice constant and lattice volume may be evaluated from the XRD patterns. When the lattice volume satisfies the aforementioned range, it may be possible to promote the conduction of lithium ions in the sulfide-based solid electrolyte, thereby achieving high ionic conductivity of the sulfide-based solid electrolyte.

The ionic conductivity of the sulfide-based solid electrolyte (in the specification, referred to as 'lithium ionic conductivity') refers to ionic conductivity at room temperature (25°C, 298 K)·atmospheric pressure (1 atm) unless otherwise stated. When the sulfide-based solid electrolyte is used in all-solid-state batteries, in practice, the ionic conductivity is preferably 4 mS/cm or more. The ionic conductivity of the sulfide-based solid electrolyte according to an embodiment of the present disclosure is 1.5 mS/cm or more, preferably 4 mS/cm or more, more preferably 8 mS/cm or more, more preferably 10.8 mS/cm or more, and most preferably 12 mS/cm or more.

The sulfide-based solid electrolyte according to an embodiment of the present disclosure may be obtained by a preparation method including the steps of: mixing a lithium source, a Group 13 element source, a phosphorus source, a sulfur source and a halogen source to obtain a mixture, and sintering the mixture under an inert atmosphere, for example, argon gas and nitrogen gas at the temperature of from 250°C to 600°C.

The lithium source, the Group 13 element source, the phosphorus source, the sulfur source and the halogen source may be a compound, for example, sulfide, oxide or nitride. Lithium sulfide (Li₂S) may be used as the lithium source, phosphorus pentasulfide (P₂S₅) may be used as the phosphorus source, and halogenated lithium (LiHa) such as lithium chloride (LiCl) and lithium bromide (LiBr) may be used as the halogen source. For example, a sulfide may be used as the Group 13 element source. Alternatively, sulfur may be supplied from another element source. That is, at least one of the lithium source, the Group 13 element source, the phosphorus source or the halogen source may also serve as the sulfur source.

In the case of the sulfide-based solid electrolyte having the argyrodite-type crystal structure, the sintering temperature is preferably from 400°C to 550°C, more preferably from 420°C to 530°C, and more preferably from 450°C to 500°C. When the sintering temperature satisfies the aforementioned range, it may be possible to promote the formation of the argyrodite-type crystal structure, thereby achieving high degree of crystallinity of the sulfide-based solid electrolyte. Accordingly, it may be possible to obtain the sulfide-based solid electrolyte having high ionic conductivity.

### [All-solid-state battery]

The electrolyte for the all-solid-state battery of the present disclosure may be used in an all-solid-state battery including a positive electrode, a negative electrode and a solid electrolyte layer. The solid electrolyte for the all-solid-state battery may be used with an active material in an electrode active material layer of the positive electrode and the negative electrode. The solid electrolyte for the all-solid-state battery may be used as a material of the solid electrolyte layer. The solid electrolyte for the all-solid-state battery may have the controlled average particle size according to the purpose of use. The ionic conductivity may be improved by controlling the average particle size of the solid electrolyte for the all-solid-state battery.

### < Solid electrolyte layer >

In the present disclosure, the solid electrolyte layer may have a thickness of about 50 *µ*m or less, and preferably from about 15 *µ*m to 50 *µ*m. Within the aforementioned range, the solid electrolyte layer may have a proper thickness in view of ionic conductivity, mechanical strength or energy density of the battery applied. For example, in terms of ionic conductivity or energy density, the thickness may be 10 *µ*m or more, 20 *µ*m or more, or 30 *µ*m or more. Meanwhile, in terms of mechanical strength, the thickness may be 50 *µ*m or less, 45 *µ*m or less, or 40 *µ*m or less. Additionally, in addition to the aforementioned thickness range, the solid electrolyte layer may have a tensile strength of from about 100 kgf/cm² to about 2,000 kgf/cm². Additionally, the solid electrolyte layer may have a porosity of 15 vol% or less or about 10 vol% or less. The solid electrolyte layer of the present disclosure is a thin film but may have high mechanical strength.

### < Positive electrode and negative electrode >

In the present disclosure, the positive electrode and the negative electrode includes a current collector and an electrode active material layer on at least one surface of the current collector, and the electrode active material layer includes a plurality of electrode active material particles and a solid electrolyte. Additionally, the electrode may further include at least one of a conductive material or a binder resin, if necessary. Additionally, the electrode may further include a variety of additives to supplement or improve the physical and chemical properties of the electrode.

In the present disclosure, the negative electrode active material may include any type of negative electrode active material for lithium ion secondary batteries. For example, the negative electrode active material may include at least one selected from carbon such as nongraphitizing carbon, graphite carbon; metal composite oxide such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Groups 1, 2 and 3 elements in the periodic table, halogen; 0<x≤1; 1≤y≤3; 1≤z≤8); lithium metals; lithium alloys; silicon metals; silicon-based alloys; indium metals; indium alloys; tin-based alloys; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers such as polyacetylene; Li-Co-Ni based materials; titanium oxide; lithium titanium oxide. In a specific embodiment, the negative electrode active material may include carbon-based materials and/or Si.

In the case of the positive electrode, the electrode active material may include, without limitation, any type of positive electrode active material for lithium ion secondary batteries. For example, the positive electrode active material may include layered compounds such as lithium cobalt oxide (LiCoO₂), lithium nickel oxide (LiNiO₂), or compounds substituted by one or more transition metals; lithium manganese oxide of chemical formula Li₁₊ₓMn₂₋ₓO₄ (x is from 0 to 0.33), LiMnO₃, LiMn₂O₃, LiMnO₂; lithium copper oxide (Li₂CuO₂); vanadium oxide such as LiV₃O₈, LiV₃O₄, V₂O₅, Cu₂V₂O₇; Ni site type lithium nickel oxide represented by chemical formula LiNi₁₋ₓAₓO₂ (A=Co, Mn, Al, Cu, Fe, Mg, B or Ga, x=0.01 to 0.3); lithium manganese composite oxide represented by chemical formula LiMn₂₋ₓAₓO₂ (A=Co, Ni, Fe, Cr, Zn or Ta, x=0.01 to 0.1) or Li₂Mn₃AO₈ (A=Fe, Co, Ni, Cu or Zn); lithium manganese composite oxide of spinel structure represented by LiNiₓMn₂₋ₓO₄; NCM-based composite oxide represented by Li(NiₐCo_{b}Mn_{c})O₂ (each of a, b and c is independently the atomic fraction of the element, 0<a<1, 0<b<1, 0<c<1, a+b+c=1); LiMn₂O₄ with partial substitution of alkaline earth metal ions for Li in chemical formula; disulfide compounds; Fe₂(MoO₄)₃, but is not limited thereto.

In the present disclosure, the current collector may include any proper current collector having electrical conductivity known in the field of secondary batteries, for example, metal plates, according to the polarity of the electrode.

In the present disclosure, the conductive material is generally added in an amount of from 1 wt% to 30 wt% based on the total weight of the mixture including the electrode active material. The conductive material is not limited to a particular type and may include any material having conductivity without causing any chemical change in the corresponding battery. For example, the conductive material may include one selected from graphite such as natural graphite or artificial graphite; carbon black such as carbon black, acetylene black, Ketjen black, channel black, furnace black, lamp black, thermal black; conductive fibers such as carbon fibers or metal fibers; fluoro carbon, metal powder such as aluminum powder, nickel powder; conductive whiskers such as zinc oxide, potassium titanate; conductive metal oxide such as titanium oxide; conductive polymer such as polyphenylene derivatives or a mixture thereof.

In the present disclosure, the binder resin is not limited to a particular type and may include those that help the bonding between the active material and the conductive material and bonding to the current collector. For example, the binder resin may include polyvinylidene fluoride, polyvinylalcohol, carboxymethyl cellulose (CMC), starch, hydroxypropylcellulose, regenerated cellulose, polyvinylpyrrolidone, tetrafluoro ethylene, polyethylene, polypropylene, ethylene-propylene-diene monomer (EPDM), sulfonated EPDM, styrene butadiene rubber, fluoro rubber, a variety of copolymers thereof. The binder resin may be generally included in a range between 1 wt% and 30 wt% or between 1 wt% and 10 wt% based on 100 wt% of the electrode active material layer.

In the present disclosure, the electrode active material layer may include at least one type of additive of an oxidation stabilizer additive, a reduction stabilizer additive, a flame retardant, a thermal stabilizer or an antifogging agent, if necessary.

The present disclosure provides a secondary battery having the above-described structure. The present disclosure further provides a battery module including the secondary battery as a unit cell, a battery pack including the battery module and a device including the battery pack as a power source. In this instance, the device may include any type of device that works using power produced by an electric motor, for example, power tools; electric cars including Electric Vehicles (EV), Hybrid Electric Vehicles (HEV), Plug-in Hybrid Electric Vehicles (PHEV); electric two-wheeled vehicles including E-bikes and E-scooters; electric golf carts; and electric power systems, but is not limited thereto.

Hereinafter, the present disclosure will be described in more detail through examples. However, the following description is presented to describe the present disclosure by way of example, and the scope of the present disclosure is not limited thereto.

### Example 1

Raw materials, i.e., lithium sulfide (Li₂S, Mitsuwa Chemical), phosphorus pentasulfide (P₂S₅, Aldrich), aluminum sulfide (Al₂S₃, Japan Pure Chemical), lithium chloride (LiCl, Aldrich) and lithium bromide (LiBr, Aldrich) were weighed and mixed with a mortar in an Ar gas glovebox such that the composition was Li_{5.4-3y}M_{y}PS_{4.4}Cl_{1.0}Br_{0.6} (amount y of Group 13 element (M)=0.00625) to obtain a mixture powder. The mixture powder was placed in a ZrO₂ pot together with ZrO₂ balls to obtain the hermetically sealed pot. The hermetically sealed pot was installed at a planetary ball mill to perform ball milling at 380 rpm for 20 hours, and the pot was opened in the glovebox to collect the powder. The powder was placed in a carbon crucible which in turn, was sealed, and sintered in the Ar gas flow at 460°C for 8 hours. The sintered powder was ground with the mortar and pestle for 10 minutes to obtain a solid electrolyte.

### Example 2

As shown in TABLE 1, except that the amount y of the Group 13 element (M) added was 0.0125, a solid electrolyte was obtained in the same way as Example 1.

### Example 3

As shown in TABLE 1, except that the amount y of the Group 13 element (M) added was 0.05, a solid electrolyte was obtained in the same way as Example 1.

### Example 4

As shown in TABLE 1, except that the amount y of the Group 13 element (M) added was 0.075, a solid electrolyte was obtained in the same way as Example 1.

### Example 5

As shown in TABLE 1, except that the amount y of the Group 13 element (M) added was 0.1, a solid electrolyte was obtained in the same way as Example 1.

### Comparative Example 1

As shown in TABLE 1, except that the amount y of the Group 13 element (M) added was 0.2, a solid electrolyte was obtained in the same way as Example 1.

### Example 6

As shown in TABLE 1, except that instead of aluminum sulfide (Al₂S₃, Japan Pure Chemical), gallium sulfide (Ga₂S₃, Japan Pure Chemical) was used as the raw material of the Group 13 element (M), and the amount y of the Group 13 element (M) added was 0.0125, a solid electrolyte was obtained in the same way as Example 1.

### Example 7

As shown in TABLE 1, except that the amount y of the Group 13 element (M) added was 0.01875, a solid electrolyte was obtained in the same way as Example 6.

### Example 8

As shown in TABLE 1, except that the amount y of the Group 13 element (M) added was 0.025, a solid electrolyte was obtained in the same way as Example 6.

### Example 9

As shown in TABLE 1, except that the amount y of the Group 13 element (M) added was 0.05, a solid electrolyte was obtained in the same way as Example 6.

### Example 10

As shown in TABLE 1, except that the amount y of the Group 13 element (M) added was 0.075, a solid electrolyte was obtained in the same way as Example 6.

### Example 11

As shown in TABLE 1, except that the amount y of the Group 13 element (M) added was 0.1, a solid electrolyte was obtained in the same way as Example 6.

### Comparative Example 2

As shown in TABLE 1, except that the amount y of the Group 13 element (M) added was 0.2, a solid electrolyte was obtained in the same way as Example 6.

### Comparative Example 3

As shown in TABLE 1, except that the Group 13 element (M) was not added, i.e., the amount y of the Group 13 element (M) added was 0, a solid electrolyte was obtained in the same way as Example 1.

**[TABLE 1]**

| Sample | Sintering temperatur e, time | Designed composition Li_{5.4-3y}M_{y}PS_{4.4}Cl_{1.0}Br_{1.6} | | Crystalline phase | | Lattice constant a=b=c (Å) | Lattice volume (Å³) | Full width at half maximum (°) | Ionic conducti vity (σ 298 K)(mS/c m) |
|---|---|---|---|---|---|---|---|---|---|
| | (°C), (h) | M | y | Argyr odite | Imp urit y | | | | |
| EX. 1 | 460,8h | Al | 0.00625 | O | - | 9.8568 | 957.7 | 0.09 | 11.7 |
| EX. 2 | 460,8h | Al | 0.0125 | O | Δ | 9.8674 | 960.7 | 0.09 | 11.5 |
| EX. 3 | 460,8h | Al | 0.05 | O | - | 9.8637 | 959.7 | 0.1 | 13.8 |
| EX. 4 | 460,8h | Al | 0.075 | O | Δ | 9.8617 | 959.1 | 0.08 | 11.3 |
| EX. 5 | 460,8h | Al | 0.1 | O | - | 9.8607 | 958.8 | 0.1 | 9.0 |
| COM. EX. 1 | 460,8h | Al | 0.2 | Δ | X | nonmeasur able | nonmeas urable | 0.15 | 0.5 |
| EX. 6 | 460,8h | Ga | 0.0125 | O | - | 9.8663 | 960.4 | 0.05 | 15.7 |
| EX. 7 | 460,8h | Ga | 0.01875 | O | - | 9.8673 | 960.7 | 0.07 | 11.9 |
| EX. 8 | 460,8h | Ga | 0.025 | O | - | 9.8609 | 958.8 | 0.06 | 9.7 |
| EX. 9 | 460,8h | Ga | 0.05 | O | Δ | 9.8614 | 959.0 | 0.1 | 6.3 |
| EX. 10 | 460,8h | Ga | 0.075 | O | Δ | 9.8414 | 953.2 | 0.1 | 6.7 |
| EX. 11 | 460,8h | Ga | 0.1 | O | Δ | 9.862 | 959.2 | 0.09 | 3.5 |
| COM. EX. 2 | 460,8h | Ga | 0.2 | Δ | X | nonmeasur able | nonmeas urable | 0.12 | 0.00098 |
| COM. EX. 3 | 460,8h | - | 0 | O | - | 9.9471 | 984.2 | 0.08 | 10.7 |

| | | | | | | | | | |
|---|---|---|---|---|---|---|---|---|---|
| ○: present in a large amount △: present in a very small amount X: a lot of impurities are present -: not almost present | | | | | | | | | |

### Comparative Example 4

Except that lithium bromide (LiBr, Aldrich) as a halogen source was not used, and only lithium chloride (LiCl, Aldrich) was used, a solid electrolyte was obtained in the same way as Comparative Example 3. That is, the designed composition of the solid electrolyte of Comparative Example 4 was Li_{5.4}PS_{4.4}Cl_{1.6}.

### [Evaluation]

The following evaluation was performed using the obtained solid electrolyte.

### (XRD measurement)

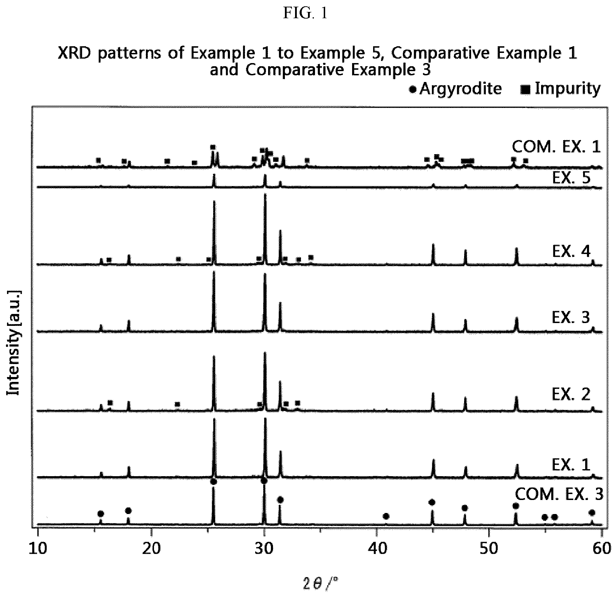

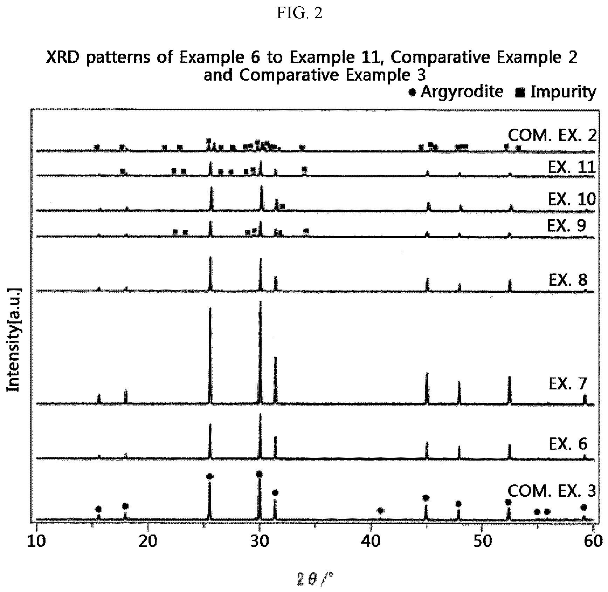

A predetermined amount of solid electrolyte was placed at a hermetically sealed holder in an Ar gas glovebox and XRD measurement was performed. The lattice constant, lattice volume and full width at half maximum were calculated from the obtained XRD pattern. The full width at half maximum was calculated from the (311) face crystal peak of the argyrodite-type crystal structure observed near 2θ=30° in FIGs. 1 and 2.

The measuring machine and conditions are as follows.
·X-ray diffraction system: Rigaku Smartlab
·X-ray source: Cu-Kα ray (λ=1.5418Å)
·Voltage: 45kV
·Current: 200mA
·Scanning range (2θ): 10-60°
·Step size: 0.01°

### (Ionic conductivity measurement)

A predetermined amount of solid electrolyte was placed in an MACOR^{®} pipe, and press-formed at 5 MPa by a single screw press in combination with the MACOR^{®} pipe and a pellet forming jig (an upper press pin and a lower press pin). Subsequently, a predetermined amount of gold powder was placed on both sides of the pellet, and press-formed at 7.5 MPa by the single screw press to obtain a MACOR^{®} pipecell. The obtained MACOR^{®} pipecell was installed at a jig cell for electrochemical measurement, and a torque was applied up to 5.0 N·m using a torque wrench to obtain an ionic conductivity measurement cell. The obtained ionic conductivity measurement cell was connected to an impedance measuring machine, and the resistance of the solid electrolyte pellet was measured at room temperature (298 K)·atmospheric pressure (1 atm) and used to determine the ionic conductivity[mS/cm] of the solid electrolyte.

### (Initial charge/discharge capacity measurement)

A NCM-based positive electrode active material having 80 mol% of Ni content and a solid electrolyte were weighed at a mass ratio of 70:30. 1.5 wt% of carbon black as a conductive aid material was added thereto and mixed together to obtain a positive electrode mixture material. 80mg of the obtained solid electrolyte was weighed, installed in a forming jig, and press-formed at 6 MPa for 1 minute to obtain a solid electrolyte pellet. 10mg of the obtained positive electrode mixture material was installed on one surface of the obtained solid electrolyte pellet, and a SUS press pin of the forming jig was pressed flat to form a positive electrode layer. An Al plate was installed on the obtained positive electrode layer, and press-formed at 30 MPa for 1 minute. Subsequently, a Li-Cu foil was installed on a side of the solid electrolyte pellet that is opposite the positive electrode layer, and press-formed at 2 MPa for 30 seconds. This was combined with the SUS press pin into a MACOR^{®} pipecell. The obtained MACOR^{®} pipecell was installed at a battery cell, and a torque of 2 N·m was applied to obtain an all-solid-state battery cell.

A charge/discharge test was performed using the obtained all-solid-state battery in a voltage range between 4.25V and 3.0V, the charge condition of CC(0.05C)-CV(0.01C cutoff) and the discharge condition of CC(0.05C). The initial charge capacity and initial discharge capacity were calculated from the obtained charge/discharge curve.

### [Evaluation results]

### (Crystalline phase)

TABLE 1 shows evaluation results of crystalline phase (crystal structure) identified from the XRD pattern by the XRD measurement. Additionally, FIGs. 1 and 2 show the measured XRD pattern.

As shown in TABLE 1, in Examples 1, 3 and 5 to 8 and Comparative Example 3, an impurity phase (also referred to as unknown phase) was not almost observed, and only argyrodite phase peaks were primarily observed. Additionally, in Examples 2, 4 and 9 to 11, argyrodite phase peaks and a very few impurity phases were observed. On the other hand, in Comparative Examples 1 and 2, a lot of impurity phase peaks were observed. The impurity phases were, for example, phases originating from the raw material Li₂S, Al₂S₃, Ga₂S₃.

FIGs. 1 and 2 show the XRD patterns of Examples 1 to 11 and Comparative Examples 1 to 3. In Examples 1, 3 and 5 in which the amount y of Al added was 0.00625, 0.05 and 0.1, respectively, Examples 6 to 8 in which the amount y of Ga added was 0.0125, 0.01875 and 0.025, respectively, and Comparative Example 3 in which the amount y of Group 13 element added was 0, only argyrodite phase peaks were primarily observed. Additionally, in Examples 2 and 4 in which the amount y of Al added was 0.0125 and 0.075, respectively, and Examples 9 to 11 in which the amount y of Ga added was 0.05, 0.075 and 0.1, respectively, only argyrodite phase peaks were primarily observed, but impurity phase peaks originating from the raw material Li₂S, Al₂S₃, Ga₂S₃ were also observed. On the other hand, in Comparative Example 1 in which the amount y of Al added was 0.2 and Comparative Example 2 in which the amount y of Ga added was 0.2, an argyrodite phase peak was not almost observed and a lot of impurity phase peaks were observed.

In Examples 1, 3, 5 to 8 and Comparative Example 3, the sulfide-based solid electrolyte having no impurity phase or almost no argyrodite-type crystal structure was obtained. The sulfide-based solid electrolyte having high degree of crystallinity may promote the hopping conduction of lithium ions, thereby contributing to the enhanced ionic conductivity.

### (Lattice volume)

In Example, the lattice constant derived from the XRD pattern was in a range between 9.8414Å and 9.8674Å, and the lattice volume was in a range between 953.2Å³ and 960.7Å³. On the other hand, in Comparative Example 1 in which the amount y of Al added was 0.2 and Comparative Example 2 in which the amount y of Ga added was 0.2, a lot of impurities made impossible to measure the lattice constant. Additionally, in Comparative Example 3 without substitution of Group 13 element (M) for the lithium sites of the sulfide-based solid electrolyte, the lattice constant was 9.9471Å, and the lattice volume was 984.2Å³. By the substitution of Group 13 element (M) for the lithium sites of the argyrodite-type crystal structure and/or incorporation of Group 13 element (M) into the lattice of the argyrodite-type crystal structure, the lattice volume of the crystal was reduced by about 2.4% to 3.1%.

Although not constrained to the theory, it is thought that one of three lithium sites replaced by Group 13 element (M) and the two lithium voids changed the crystal volume of the sulfide-based solid electrolyte. Alternatively, it is thought that the infiltration of Group 13 element (M) into the lattice of the argyrodite-type crystal structure changed the crystal volume of the sulfide-based solid electrolyte. It is thought that the lithium voids become the paths for hopping conduction of lithium ions, contributing to the enhanced ionic conductivity. Additionally, the Group 13 element (M) replacing the lithium sites or infiltrated into the lattice may have trivalency, making a change in force that attracts anions near the Group 13 element (M) sites, compared to a monovalent lithium ion. Accordingly, it is thought that the change in crystal volume of the sulfide-based solid electrolyte leads to a suitable structure for hopping conduction of lithium ions.

In Example, the full width at half maximum of the (311) face crystal peak of the argyrodite crystal structure was in a range between 0.05° and 0.1°, while in Comparative Example 1 and Comparative Example 2, 0.15° and 0.12°, respectively. In particular, Example 6 in which the amount y of Ga =0.0125 showed a small full width at half maximum and high ionic conductivity. It is thought that the small full width at half maximum, which corresponds to a large crystallite size, will contribute to the enhanced ionic conductivity.

### (Ionic conductivity)

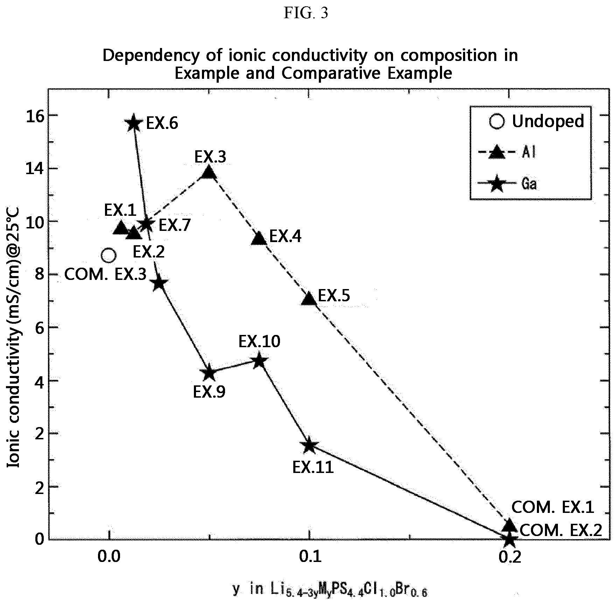

TABLE 1 shows the ionic conductivity measurement results. Additionally, FIG. 3 is a graph in which the amount y of Group 13 element (M) added in the composition Li_{5.4-3y}MyPS_{4.4}Cl_{1.0}Br_{0.6} of the sulfide-based solid electrolyte is the horizontal axis, and the ionic conductivity measured at 25°C, atmospheric pressure is the vertical axis. Each point in FIG. 3 corresponds to Example 1 to Example 5 and Comparative Example 1 doped with Al as the Group 13 element (M), Example 6 to Example 11 and Comparative Example 2 doped with Ga as the Group 13 element (M), and Comparative Example 3 ('undoped' in the drawing) without doping with the Group 13 element (M).

As can be seen from FIG. 3 and TABLE 1, in Example 1 to Example 5, the ionic conductivity was in a range between 9.0 mS/cm and 13.8 mS/cm. In Example 3 in which the amount y of Al added as the Group 13 element (M) was 0.05 exhibited high ionic conductivity of 13.8 mS/cm. On the other hand, in Comparative Example 1 in which the amount y of Al added was 0.2, the ionic conductivity was 0.5 mS/cm. Additionally, Example 6 in which the amount y of Ga added as the Group 13 element (M) was 0.0125 exhibited the highest ionic conductivity of 15.7 mS/cm. On the other hand, in Comparative Example 2 in which the amount y of Ga added was 0.2, the ionic conductivity was 0.00098 mS/cm. As described above, the addition of the Group 13 element (M) in the optimum amount led to higher ionic conductivity of Examples 1 to 11 than ionic conductivity of Comparative Examples 1 and 2. It was thought that in Comparative Examples 1 and 2, too large amount y of Al and Ga added as the Group 13 elements (M) reduced the degree of crystallinity of the argyrodite-type crystal structure, resulting in low ionic conductivity. In Comparative Example 3 in which Group 13 element (M) was not added, the ionic conductivity was 10.7 mS/cm. Although not shown in TABLE 1, in Comparative Example 4 in which bromine (Br) was not included as the halogen element, the ionic conductivity was 8.1 mS/cm. It was thought that the bromine (Br) formed lithium bromide (LiBr) with Li in the sulfide-based solid electrolyte, and the lithium bromide (LiBr) absorbed moisture that may reduce the ionic conductivity, thereby improving the ionic conductivity.

Additionally, as can be seen from FIG. 3 and TABLE 1, when the amount y of Al added as the Group 13 element (M) is 0.05 (Example 3), the ionic conductivity increases, compared to y=0.0125 (Example 2) and y=0.075 (Example 4). Referring to the XRD pattern of FIG. 1, in Example 3, an impurity phase is not almost observed, while in Examples 2 and 4, a very few impurity phases (unknown phase) are observed. Additionally, in Examples 6 to 8 in which the amount y of Ga added as the Group 13 element (M) is from 0.0125 to 0.025, the ionic conductivity increases, compared to Examples 9 to 11 in which the amount of Ga added is from 0.05 to 0.1. Referring to the XRD pattern of FIG. 2, in Examples 6 to 8, an impurity phase is not almost observed, while in Examples 9 to 11, a very few impurity phases (unknown phase) are observed. Accordingly, it is thought that the increase in ionic conductivity results from the increase in degree of crystallinity of the argyrodite-type crystal structure due to the reduction in impurities present in the sulfide-based solid electrolyte. As described above, to increase the ionic conductivity of the sulfide-based solid electrolyte, high degree of crystallinity of the argyrodite-type crystal structure including only argyrodite phase without an impurity phase is preferred.

Examples 1 to 3 in which y≤0.075 (the amount y of Al added as the Group 13 element (M)) and Examples 6 and 7 in which y ≤0.01875 (the amount y of Ga added as the Group 13 element (M)) exhibited higher ionic conductivity than Comparative Example 3 in which Group 13 element (M) was not added. From the XRD results, it is thought that Comparative Example 3 has a higher degree of crystallinity of the argyrodite-type crystal structure than Examples 2 and 4, but actually, ionic conductivity of Examples 2 and 4 having lower degree of crystallinity is higher than ionic conductivity of Comparative Example 3 having higher degree of crystallinity. This confirms that not only the degree of crystallinity of the argyrodite-type crystal structure, but also the presence of Group 13 element (M), i.e., a change in lattice volume resulting from the presence of Group 13 element (M) may affect the ionic conductivity.

As shown in FIG. 3 and TABLE 1, when the amount y of Al added as the Group 13 element (M) is 0.1 or less, the ionic conductivity was 9.0 mS/cm or more. When the amount y of Al added as the Group 13 element (M) is 0.075 or less, the ionic conductivity was 11.3 mS/cm or more that is higher than the ionic conductivity of 10.7 mS/cm in Comparative Example 3 in which Group 13 element (M) was not added. Additionally, when the amount y of Ga added as the Group 13 element (M) is 0.1 or less, the ionic conductivity was 3.5 mS/cm or more. When the amount y of Ga added as the Group 13 element (M) is 0.01875 or less, the ionic conductivity was 11.9 mS/cm or more that is higher than the ionic conductivity of 10.7 mS/cm in Comparative Example 3 in which Group 13 element (M) was not added. Additionally, the ionic conductivity of Comparative Example 4 in which bromine (Br) was not included as the halogen element was 8.1 mS/cm that is lower than the ionic conductivity of 10.7 mS/cm in Comparative Example 3 including bromine (Br) as the halogen element.

### (Battery characteristics)

When the sulfide-based solid electrolyte of Example 3 in which the amount y of Al added as the Group 13 element (M) is 0.05 was used in the solid electrolyte layer of the all-solid-state battery, the sulfide-based solid electrolyte had high stability for the lithium metal as the negative electrode material, and the all-solid-state battery could be stably charged/discharged. A relative ratio of initial discharge capacity of the all-solid-state battery capacity using Example 3 in the solid electrolyte layer to the all-solid-state battery capacity using Comparative Example 3 in the solid electrolyte layer was 106%. Additionally, the sulfide-based solid electrolyte of Example 6 in which the amount y of Ga added as the Group 13 element (M) is 0.0125 was used in the solid electrolyte layer of the all-solid-state battery, the sulfide-based solid electrolyte had high stability for the lithium metal as the negative electrode material, and the all-solid-state battery could be stably charged/discharged. A relative ratio of initial discharge capacity of the all-solid-state battery capacity using Example 6 in the solid electrolyte layer to the all-solid-state battery capacity using Comparative Example 3 in the solid electrolyte layer was 107%. As described above, when the solid electrolytes of Examples 3 and 6 having high ionic conductivity were used in the all-solid-state batteries, it was possible to improve the all-solid-state battery capacity.

While the present disclosure has been hereinabove described by a limited number of embodiments and drawings, the present disclosure is not limited thereto, and it is obvious to persons having ordinary skill in the technical field pertaining to the present disclosure that a variety of modifications and change may be made within the technical aspect of the present disclosure and the appended claims and their equivalent scope.

## Claims

1. A sulfide-based solid electrolyte comprising:
Group 13 elements, wherein the sulfide-based solid electrolyte has an argyrodite-type crystal structure,
wherein the sulfide-based solid electrolyte is represented by chemical formula Li_{7-x-3y}M_{y}PS₆₋ₓHaₓ,
wherein in the chemical formula, the M is at least one selected from the Group 13 elements,
wherein the Ha is at least one selected from halogen elements, and the Ha includes Br, and
wherein 0 < x< 2.5 and 0 < y < 0.2 are satisfied.

2. The sulfide-based solid electrolyte according to claim 1, wherein the y satisfies 0 < y < 0.1.

3. The sulfide-based solid electrolyte according to claim 1 or 2, wherein the M is Al or Ga.

4. The sulfide-based solid electrolyte according to claim 1, wherein the M is present at a 96i site of the argyrodite-type crystal structure.

5. A method for preparing the sulfide-based solid electrolyte defined in claim 1, the method comprising:
mixing a lithium source, a Group 13 element source, a phosphorus source, a sulfur source and a halogen source to obtain a mixture; and
sintering the mixture at a temperature of from 250°C to 600°C.

6. An all-solid-state battery comprising:
a positive electrode, a negative electrode and a solid electrolyte layer,
wherein the solid electrolyte layer includes the sulfide-based solid electrolyte defined in claim 1.
